# EUROPEAN PATENT SPECIFICATION

(11) **EP 2 385 899 B1**
(45) Date of publication and mention of the grant of the patent: **10.09.2014**
(21) Application number: 10729091.8
(22) Date of filing: 08.01.2010
(51) Int. Cl.: B65B 51/06, B65H 35/00

(54) **MULTI-FUNCTIONAL TAPE APPLICATOR**
MULTIFUNKTIONSBANDAPPLIKATOR
APPLICATEUR MULTIFONCTION DE RUBAN ADHÉSIF

(30) Priority: 12.01.2009 US 318877
(43) Date of publication of application: 16.11.2011
(73) Proprietor: Sico Industrial Limited, Hong Kong (CN)
(72) Inventor: LAM, Augustine, Shing, Tak, Joe, Vancouver British Columbia V6P 1R3 (CA)
(74) Representative: Spencer, Michael David
(86) International application number: PCT/CN2010/000029
(87) International publication number: WO 2010/078832

(56) References cited:
- AU-B2- 621 687
- CN-A- 1 288 057
- DE-A1- 3 820 060
- GB-A- 2 325 453
- US-A- 4 061 526
- US-A- 4 789 418

## Description

### Field of Invention

The present invention relates to a multi-functional tape applicator for selectively applying closure tapes in different configurations such as L-clip and C-clip configurations

### Background of the Present Invention

Equipment for applying tape in a C-clip configuration is very well known and is commonplace in the literature and the industry. C-clip configuration generally applies a continuous ribbon of tape starting on a leading face of a case or carton passing through the machine along the surface of the case facing the taper and at least partway along the trailing face of the case i.e. the ribbon of tape forms a C-shape.

L-clip configuration generally applies a ribbon of tape along two adjacent a faces of case e.g. around a corner of the case i.e. the ribbon of tape is formed into an L-shape.

"L"-clip taping fulfills the "sustainability" packaging requirements in material and cost-saving comparing to the common "C"-clip taping. The concept of L-clip taping is known attention is directed to US patent 4,640,731 that employs 2 separate applicators one to apply an L clip to the leading end and the other to apply an L clip to the trailing end of the case. US patent 4,642,157 applies an L-clip using and application roll to apply the tape to one wall of the case and then a separate wipe down roll to apply the tape to an adjacent surface of the case. This device can only apply an L clip to the leading end of the case. Similarly US patent 5,227,002 provides a device that can apply a tape in an L-clip configuration to leading face only of a case. DE-A-3820060 discloses a tape applicator where a tape application roll assembly may be moved to an over-travel position by means of a pneumatic actuator.

Majority of carton closure do not require a continuous C-clip tape to seal the full length of the flaps, particularly carton package for the domestic business to business market where the tape sealed cartons are stacked, palletized and pallet wrapped with plastic film for shipping and storage.

An L-clip configuration of a sealing tape is ideal for light weight cartons; single hinged flap cartons; tray carton with top lid; half slotted case, etc.

The L-clips generally may be peeled off easily by hand without the use of box cutting knife, eliminating injuries and product damages when opening the carton with knife.

In general, the adhesion and the strength of the pressure sensitive tape material are strong enough to withstand the weight of the content inside the carton with only the front and the back L-clips tape on top or at the bottom of the carton. C-clip taping provides a more secure and dust/inserts/tamper proof package. It is ideal for individual consumer package subject to multi-handling and or over-sea shipping.

Regardless of all the obvious benefits of "L"-clip taping, the "C"-clip tape applicators are much more simple, reliable and user-friendly. Mostly operate mechanically without power-driven. They can be removed from the machine for tape replenishing with no tools. Because of its simplicity; low cost; easy to use and low maintenance as well as its long history of taping method, the popularity of C-clip taping remains very strong in the industry. The currently available L-clip tape applicators in the industry are dedicated for L-clip taping only, mostly operated by air cylinder with electrical control, meaning external sensors wiring and two power sources are required. Mechanical non-powered L-clip tape applicators with separated front and back units are too complicated since it has two individual tape rolls and other duplicated apparatus (see US patent 4,640,731 referred to above). They are not particularly user-friendly.

In general, L-clip tape applicators are much larger in size than conventional C-clip applicators and require more mounting space, extra wiring, special installation and a longer drive system to accommodate the tape applicator. Since the known L-clip tape applicators are dedicated for a single function, the carton sealing machine is dedicated for "L"-clip taping only. In situation where it is required to change the taping configuration, it is necessary to replace the entire tape applicator accordingly. The machine has to be shut down for the removal and disconnection of the existing unit and the installation, connection and set up of a different tape applicator.

The concept of a multifunctional taper capable (with minor adjustments) to apply a tape selectively in a C-clip or L-clip configuration not taught in any of the reference Applicant has seen.

### Brief Description of the Present Invention

It is an object of the present invention to provide to provide a multifunction tape applicator as defined in claim 1.

### Brief Description of the Several Views of the Drawings

Further features, objects and advantages will be evident from the following detailed description of the preferred embodiments of the present invention taken in conjunction with the accompanying drawings in which;
Figure 1 a is a schematic illustration with parts omitted for clarity of the multifunctional tape applicator of the present invention.
Figure 1b is a more detailed side elevation of a cutting assembly used in the present invention.
Figure 1c is a section through the cam follower showing the follower in operative position and illustrating its ability to be moved between an operative and an inoperative position
Figure 1d is a schematic illustration with parts omitted showing the applicator in the over-travel position in tape cutting of the first L-clip to a carton.
Figure 1e is a schematic illustration with parts omitted showing the applicator in an advanced position relative to Figure 1d and applying a lead end of a second L-clip to a carton.
Figure 1f is a schematic illustration showing the positions of the applicator roll and wipe down roll during operation of the applicator and illustrating the use of a pin and slot interconnection between the push bar link and the application and wipe down assemblies.
Figures 1g, 1h, 1i, 1j and 1k illustrate several forms of interconnections by various forms of push bar links between the application assembly and the wipe down assembly to accommodate movement to the over-travel position of the application assembly.
Figure 1l illustrates a method of using a fixed roller to provide the function of the wipe-down roll at over-travel position.
Fig 1m shows a fixed roller similar to Figure 1l and an over-travel linkage with a single-acting normally extended, spring-return air cylinder.
Figure 2a is a view similar to Figure 1 a but showing one form of applicator cam.
Figure 2b is a side elevation view showing a modified form of actuator cam.
Figure 2c shows a screw-in stop pin to be used for applying a single front only "L"-clip tape on the carton with the cam actuator tape applicator as illustrated in Fig 6c.
Figures 2d, 2e, 2f and 2g illustrate the operation of the actuator cam with the travel path of a carton, with fig 2g illustrating the cam returned to home position ready for the next carton.
Figures 2h illustrates a cam with individual legs
Figure 2i shows an alternative actuator cam structure with a two part cam.
Figure 3a schematically illustrates a multi-functional tape applicator with solenoid type actuator and sensors to activate in place of the mechanical system employing the actuator cam.
Figure 3b is a schematic wiring diagram for the system shown in Figure 3a. Limit switches contacts are being shown for simplicity reason.
Figure 3c illustrates the multi-functional tape applicator with solenoid and sensors actuated to perform the tape cutting action for the front or leading L-clip tape.
Figure 3d illustrates the rear or trailing L-clip tape application action after the tape-cutting action for the front L-clip as illustrated by figure 3c.
Figures 4a to 4h inclusive illustrates examples of forms of tape applications that may be applied using the present invention.
Figures 5a and 5b illustrate tape applications with different cut off patterns.
Figures 5c, 5d and 5e illustrate different cut off knife configurations that are recommended for use in this invention.
Fig 6a-1 shows a carton sealed with top and bottom "C"-clip tape.

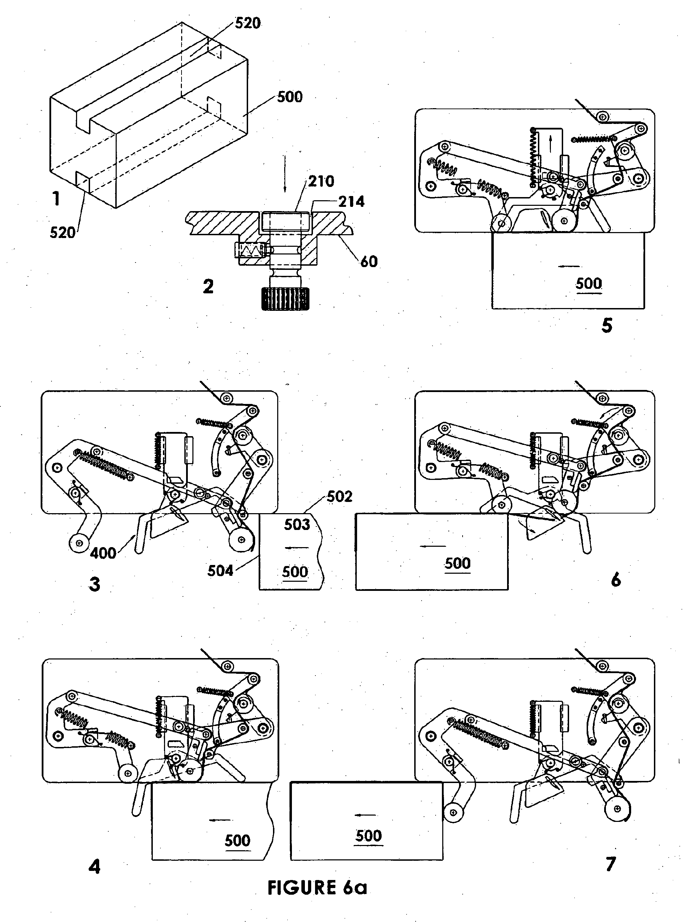

Fig 6a-2 shows the set-up requirement for C-clip tape application with the cam follower at disengaged position.
Fig 6a-3, 4, 5, 6, 7 show the sequence of operation for C-clip tape application of the multifunctional tape applicator with cam actuation and set-up requirement as shown on Fig 6a-2.

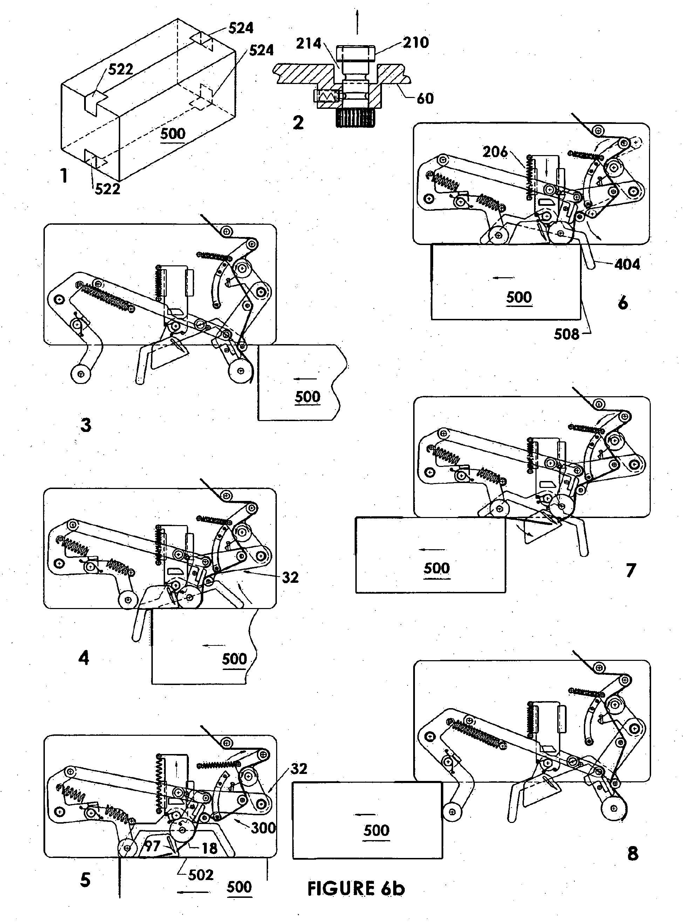

Fig 6b-1 shows a carton sealed with front and rear L-clip tapes on top and bottom.
Fig 6b-2 shows the set-up requirement for front and rear L-clip tape application with the cam follower at engaged position.
Fig 6b-3, 4, 5, 6, 7, 8 show the sequence of operation for front (leading) and rear (trailing) L-clip tape application.

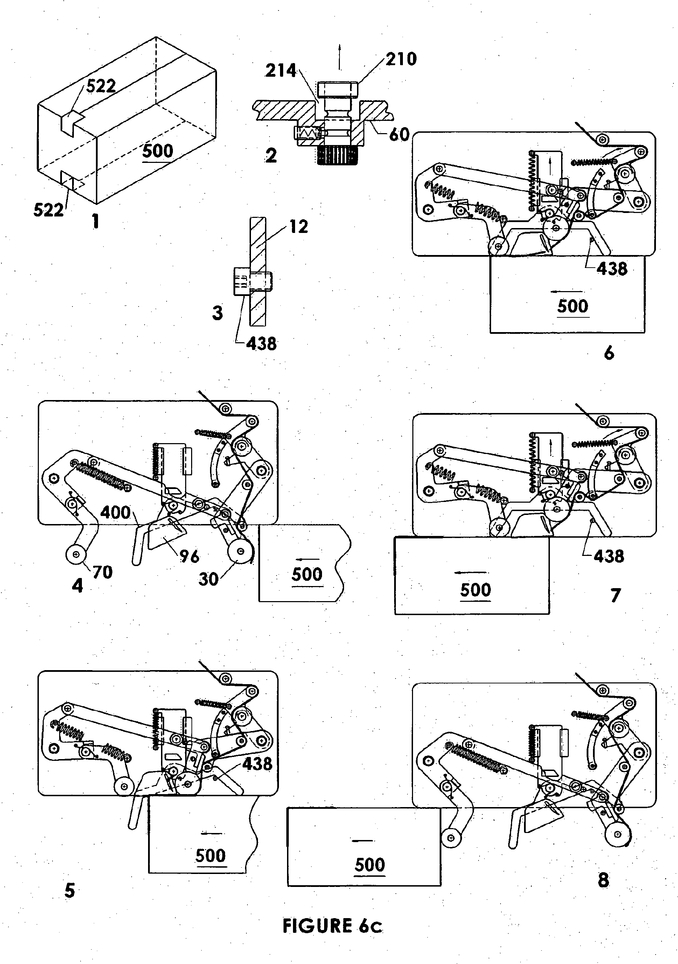

Fig 6c-1 shows a carton sealed with only front or leading L-clip tapes on top and bottom.
Fig 6c-2, 3 show the set-up requirements for front only L-clip tape application.
Fig 6c-4, 5, 6, 7, 8 show the sequence of operation for front only "L"-clip tape application of the multifunctional tape applicator with cam actuation and set-up requirements as shown on Fig 6c-2,3.

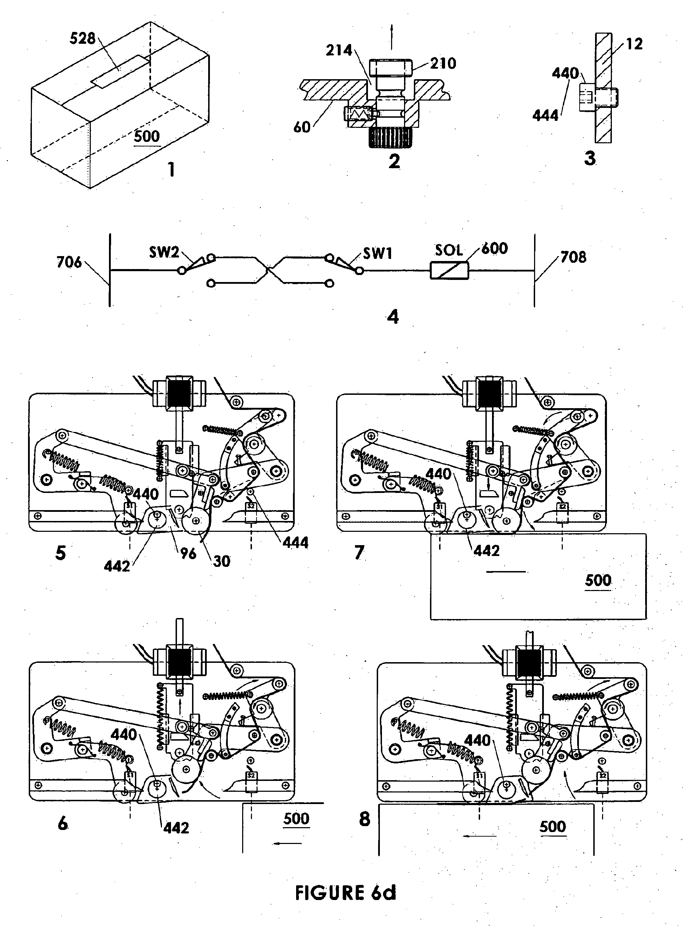

Fig 6d-1 shows a carton sealed with a discrete section of tape on the top surface.
Fig 6d-2, 3 show the set-up requirements for application of a discrete sectional of tape.
Fig 6d-4 shows a typical control circuit with two switches or sensor.
Fig 6d-5, 6, 7, 8 show the sequence of operation to apply a section of tape on the top surface of the carton.

### Detailed Description of the Invention

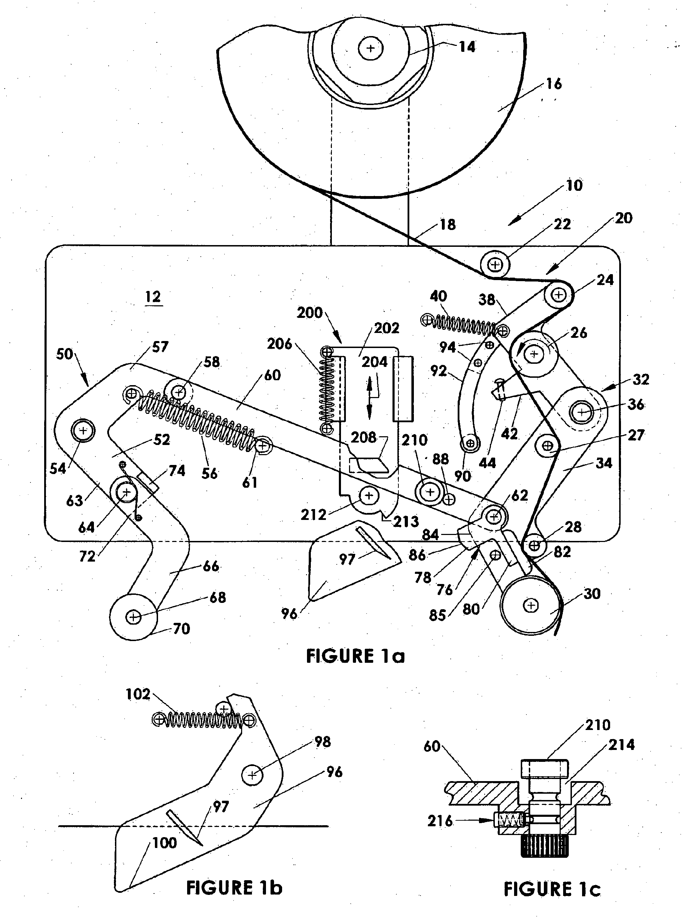

Turning to Figure 1a the multifunctional tape applicator 10 of the present invention is illustrated with parts omitted for clarity. As shown the applicator 10 is composed of a main frame plate or structure 12 on which the various components and/or assemblies are mounted. A tape support 14 carries a roll of tape 16 from which the tape ribbon 18 is dispensed and travels along the tape path 20 from the roll 14 over an entry guide roll 22, dancer roll 24, one way clutch roll 26 which turns in the direction of ribbon feed from roll 16, a guiding roll 27, exit guide roll 28 to applicator (or application) roll 30.

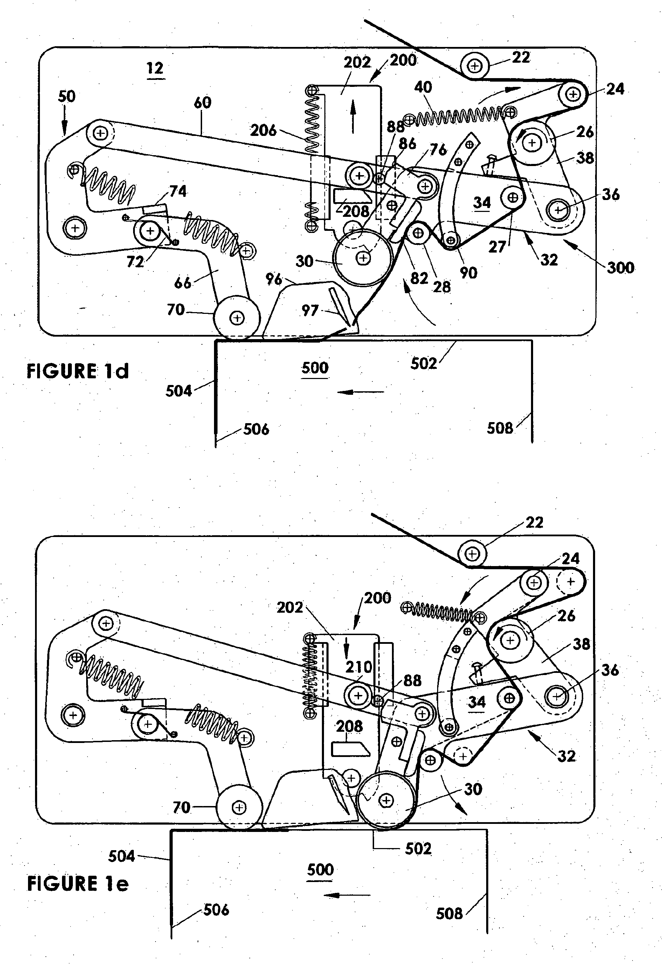

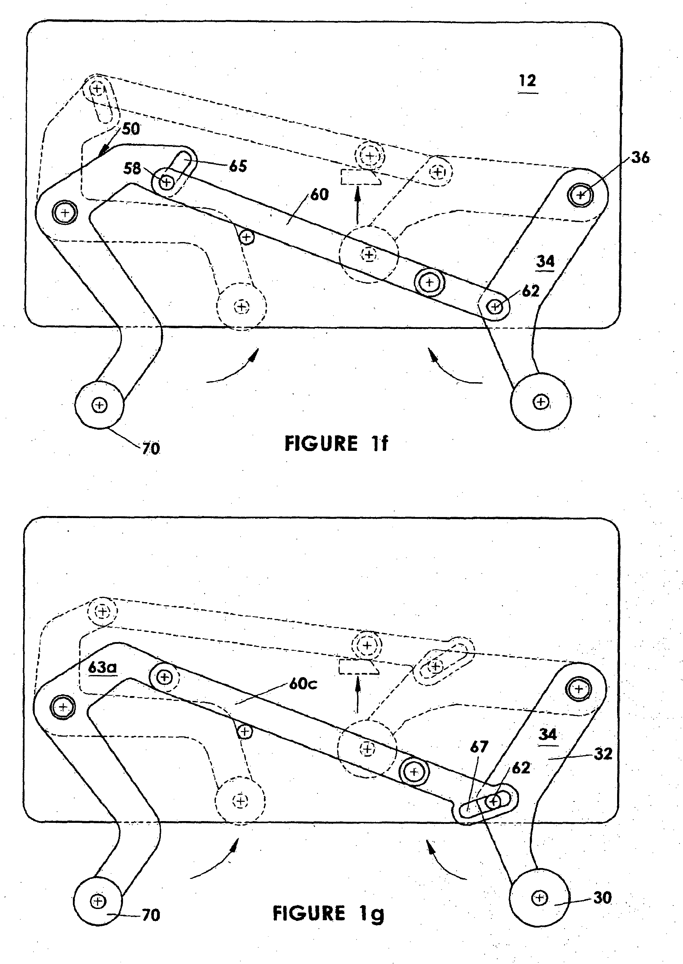

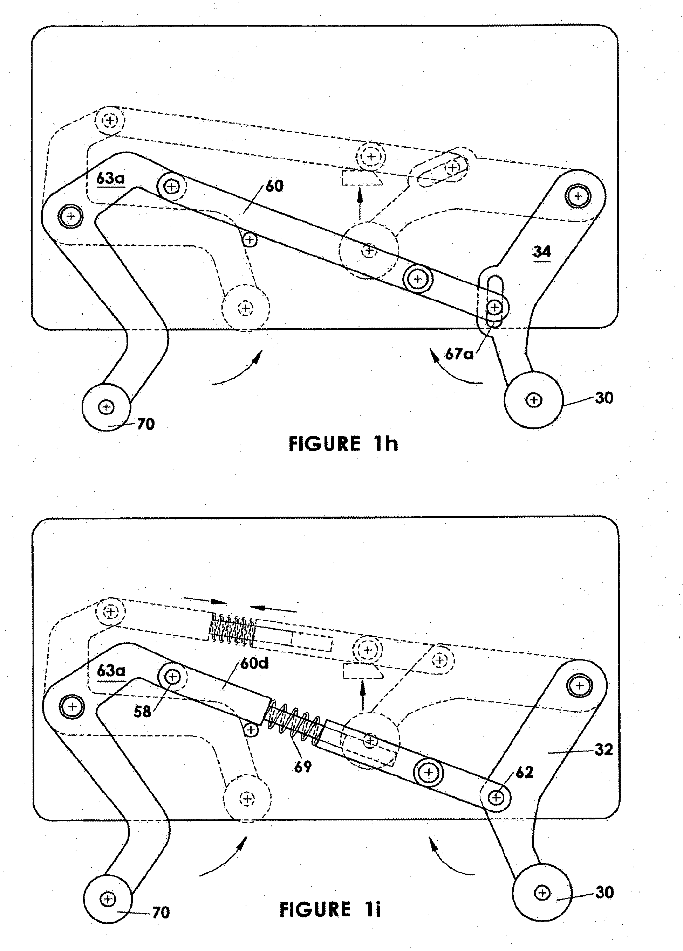

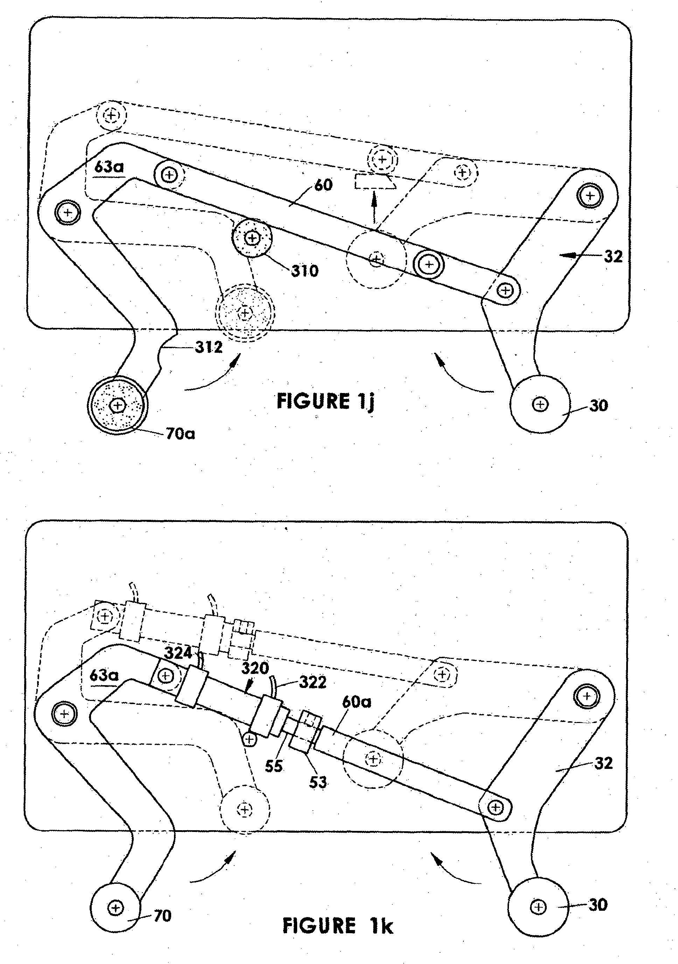

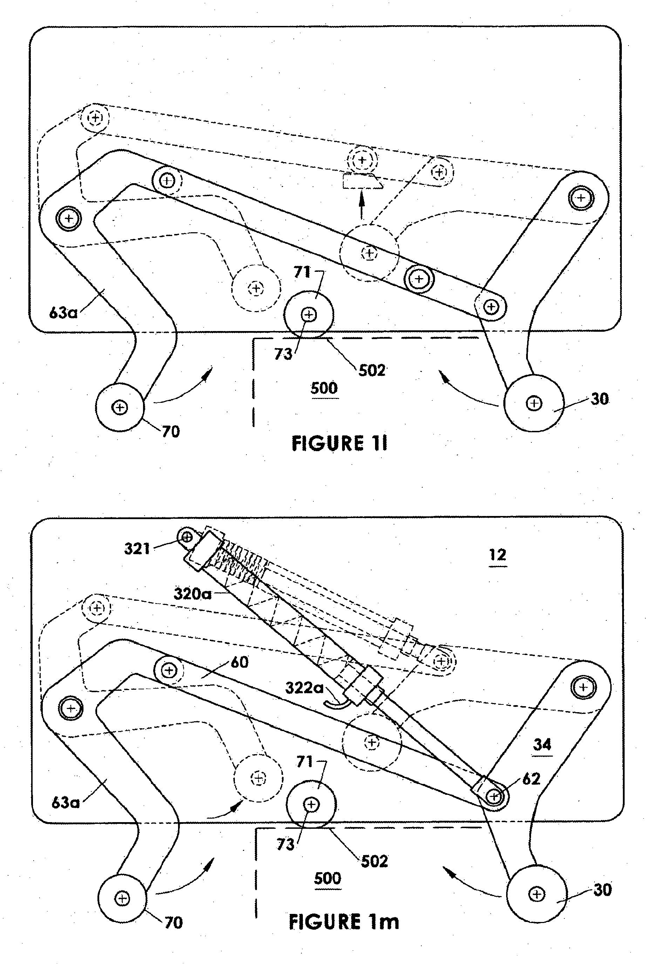

The application roll or applicator roll assembly 32 is composed of an applicator arm 34 pivotably mounted adjacent to one end thereof on the frame 12 on an axel as indicated at 36 and adjacent to its opposite end i.e. its on the free end the applicator roll 30 is mounted. The guide roll 27 and exit roll 28 are also mounted on the arm 34 as shown in Figure 1 a between the pivot mount 36 and the applicator roll 30.

A dancer arm 38 is also pivotably mounted on the frame 12 via the axel 36 and mounts the dancer roll 24 and one way clutch roll 26. The dancer arm 38 is biased to the left as viewed in figure 1a via the spring 40 connected between the dancer arm 38 and the frame 12. A stop arm 42 projects to the left from arm in Figure 1 a and is provided with an adjustable abutment 44 positioned to engage the arm 34 when the application roll assembly 32 is in over-travel position (shown in Figure 1d) as will be described below.

A wipe down assembly 50 is composed of a V-shaped wipe down arm 52 pivotably mounted on the frame 12 via the pivot pin 54 and in the illustration of Figure 1a is biased in a clockwise direction via the spring 56 connected between the arm 52 and the frame 12. This clockwise movement is limited by a pin 61 that engages the link 60 between the side mechanism 200 (to be described below) and the assembly 50. It will be apparent that the stop pin 61 (or its equivalent) serves to stop movement of the wipe down roll 70 (described below) and of the push bar link 60 toward the carton 500 being taped.

A first leg 57 of the arm 52 is pivotably connected as indicated at 58 to one end of a push bar link 60, the opposite end of which is pivotably connected as indicated at 62 to the application arm 34 of the application roll assembly 32. The second leg 63 of the arm 52 adjacent to its free end pivotably mounts as indicted by the pin 64 a wiper roll mounting arm 66 adjacent to one end of the wiper roll mounting arm 66. The arm 66 rotatably mounts as indicated by pin 68 a wipe down or wiper roll 70 adjacent to its free end. The arm 66 is biased in a counter clockwise direction about the pin 64 via a spring 72 one end of which is connected to the arm 63 and the other to arm 66 to releasably hold the arm 66 in abutting relationship with a stop 74 on the arm 63.

A brake assembly 76 is pivotably mounted on the arm 34 via the pin 62 to which the link 60 is connected. The brake assembly 76 is formed by a V-shaped has a brake arm 78 mounted adjacent to the apex of the V-shape on the pin 62 and one leg 80 carries a brake pad 82 adjacent to its free end and the other leg 84 has a cam 86 at its free end. The brake pad 82 cooperates with the exit roll 28 to, when activated, pinch the tape ribbon 18 there between and brake the movement of the ribbon 18. A stop pin 85 cooperates with the side of the leg 80 remote from the brake pad 82 to limit the movement of the brake pad 82 away from the path 20 of the tape 18 i.e. away from the exit roll 28. The cam 86 on the leg 84 cooperates with a pressure cam pin 88 mounted on the link 60 in position to cooperate with the cam 86 when the assembly 32 is in over-travel position (shown in Figure 1d) as will be described below.

A stationary extension roller 90 is mounted on the free end of an extension roller arm 92 the opposite end of which is fixed to the frame 12 as indicated by the bolts 94. The operation of this extension roller 90 will be described below.

A cut off knife assembly 96 (seen Figure 1b) has a knife 97 and is mounted on the frame 12 via a pivot pin 98. A cam surface 100 is provided on a free end of the knife assembly which is engages the adjacent surface of a carton being taped to hold the cut off assembly against the pressure of spring 102 to hold the knife assembly 96 and thereby the cut off knife in an elevated position to cut the trailing end of a leading L-clip when a L-clip taping is being done and yet be free when the cam surface 100 clears the adjacent surface of the case being taped to be moved by the spring to cut the tape after the trailing L-clip (or the C-clip) has been completed.

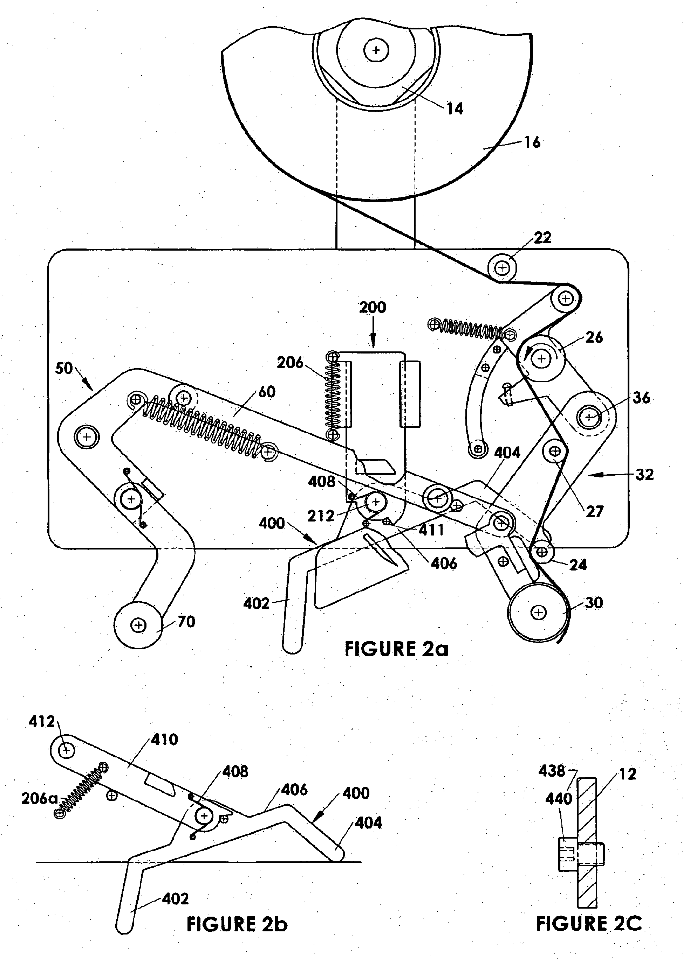

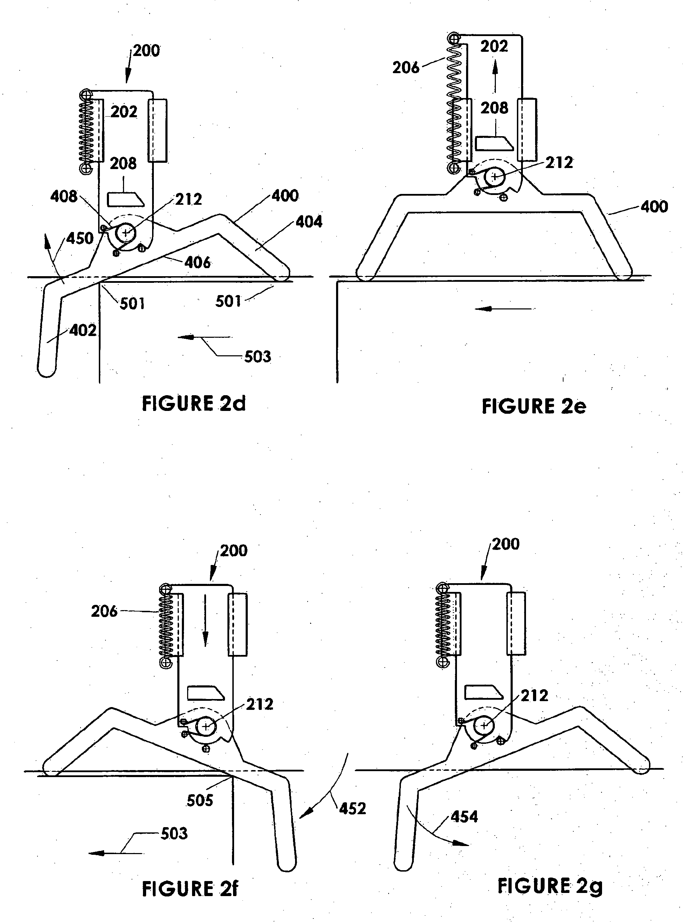

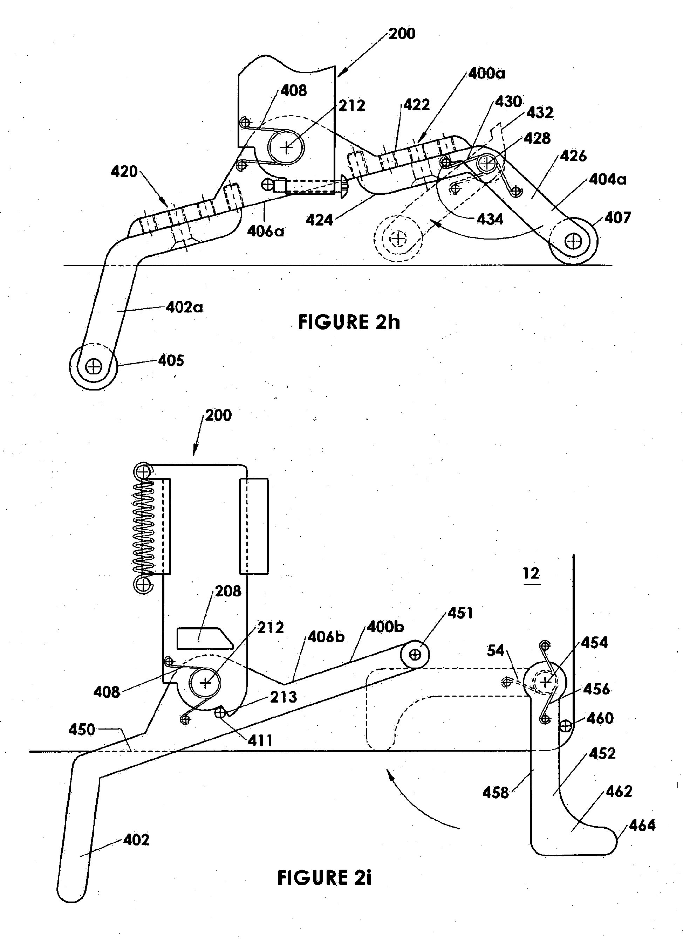

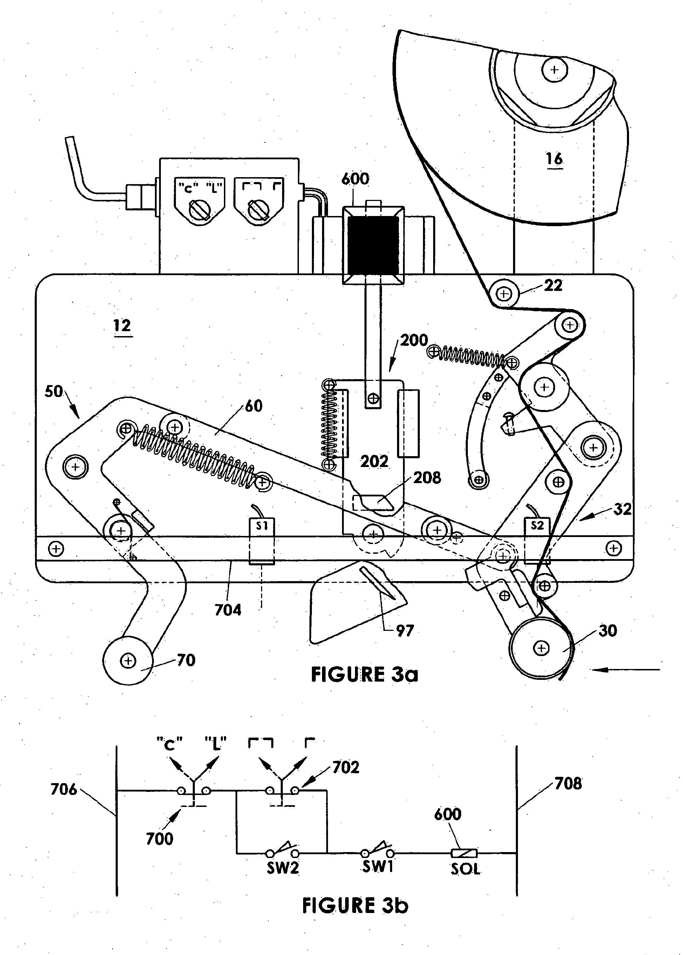

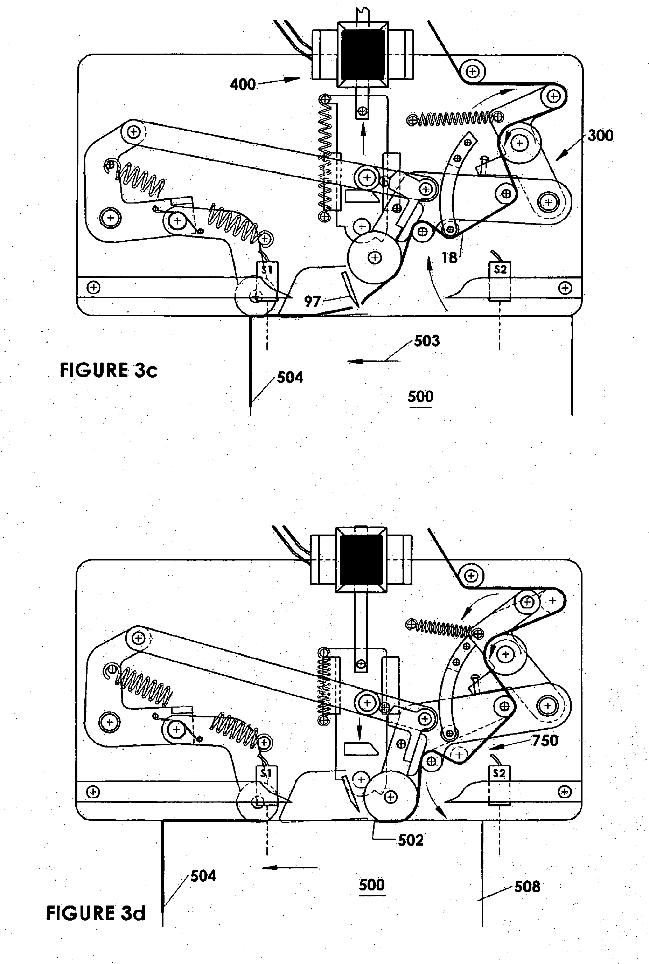

Part of the mechanism 200 to move the application assembly to over-travel position shown in Figure 1d is shown in Figure 1a (the actuators for the so moving the application assembly are illustrated in figures 2 and 3 and will be described below). The part of mechanism 200 shown in Figure 1a includes a slide plate 202 slidably mounted on the frame 12 as indicated by the arrow 204 and is biased toward the carton being processed by the spring 206. The slide plate 202 has fixed to it a cam plate 208 that is positioned to engage with a cam roller 210 mounted on the link 60 when the application arm assembly 32 is moved to over-travel position. A pin 212 connects the slide plate 202 to the activation cams shown in Figures 2 and a suitable cam stop 213 is provided to stop the activating cam 400 as will be described below.

The cam roller 210 is moveable between an active engaging position shown in Figure 1c wherein the roller 210 extends from one side of the link 60 and an inoperative or retracted position wherein the roller 210 is received within the pocket 214. A suitable detent pin is used to hold the roller in the selected position. When the roller is in active position it will engage with the cam plate 208 and be carried with the slide as it is moved away from the carton being processed thereby to move the application system to its over-travel position as shown in Figure 1d.

Turning now to Figure 1d the applicator assembly 32 is shown in over-travel position 300. In this position the slide plate 202 has been moved away from the carton 500 being processed via a mechanism or system yet to be described thereby moving the cam plate 208 and thus the roller 210 and thereby the link 60 in the same direction. This movement of the link 60 pivots the assembly 32 further clockwise around the axel or pivot pin and lifts the applicator roll 30 well clear of the adjacent surface 502 of the carton 500 to provide clearance there between as is evident from Figure 1d. Movement to the over-travel position 300 causes several thing to happen, namely: abutment 44 engages the arm 34 thereby moving the arm 38 and the dancer roller to extend the tape path and thus provide slack in the tape when the application assembly is moved from over-travel position; the cam 86 of the brake assembly engages the pressure cam pin 88 to clamp the tape between the pad 82 and the exit roller 28; the extension roller 90 traverses the normal path of the tape 18 and extends the length of tape between the guide roll 27 and the exit roll 28 to further provide slack in the tape 18; and the tape ribbon 18 is brought in contact with the knife 97 and is cut.

Next the mechanism 200 is moved from over-travel position 300 retracting the dancer roll releasing the brake 80, allowing the extension roll 90 to stay back to the other side of the tape path and the tape (roll 30) away from the knife 97. This movement from the over-travel position 300 moves the roll 30 and thereby the free end of the tape 18 against the adjacent surface 502 of the carton 500 to attach the next length of tape to the adjacent surface of the carton (see Figure 1e). Normally this next length of tape will form the trailing L-clip.

It will be apparent that the leg leading L-clip 504 applied to the leading face 506 of the carton 500 is applied by the application roll 30 in the conventional manner and that the leg of the trailing L-clip that extend along the trailing face 508 of the carton is wiped down via the wipe down roll 70 in the conventional manner as is the tape extending from this leg severed by the cut off mechanism 96.

It will be apparent that it is desirable to have the wipe down roll 70 in engagement with the tape on the adjacent face 502 of the carton 500 when the application assembly is in the over-travel position 300. This is obtained in the Figure 1a embodiment by the spring 72 moving the arm 66 away from the abutment 74 to force the roll 70 toward and against the surface 502 even when the movement to the over-travel position would tend to move the roll 70 away from the surface 502.

The push bar link 60 may take a variety of different forms to accommodate movement of the application assembly 32 into over-travel position 300 while maintaining the wipe down roll 70 in the required position. Some alternatives are shown in Figures If to 1h. In Figure If the pin 58 is received in a slot 65 which permits lost motion between the link 60 and the assembly 50. In Figure 1g a slot 67 is provide at the end of link 60c (equivalent to link 60) adjacent to the assembly 32 and cooperates with the pin 62 to provide the lost motion connections alternatively the pin 62 could be fixed to the end of link 60 and the slot 67a be provided in the arm 34 to achieve the same result (see Figure 1h). In Figure 1i the link 60 has been replaced by an expandable link 60d biased to expanded position by the spring 69 and compressed baby movement of the assembly 32 to the over-travel position 300.

The action of keeping the roll in contact with the surface 502 when the application assembly is in the over-travel position 300 may be achieved in a variety of different ways examples of which are shown in Figures 1j and 1k.

In Figure 1j this is achieved using a one piece arm 63a wherein the arms 63 and 66 are integrated and the pressure toward the surface 502 is obtained by a compressible stop 310 that engages the pocket 312 in the arm 63 a when the roller 70 is contacting the surface 502 of a carton to resiliently urge a compressible roll 70a that replaces roll 70 against the surface 302. In the solid line position the roll 310 acts as a stop replacing the stop pin 61 of figure 1a and in the dash line position engages in the pocket 312 to hold the roll 70a against the surface 502. If desired the stop 61 need not be replaced i.e. the roll 310 need not act as a stop in the solid line position and the position of a stop such as pin 61 may be selected as required.

In figure 1k the push bar link 60 has been replace by a contractible (or extendable) push link 60a that includes a variable length actuator 320 that preferably is a pneumatic cylinder with operating air connections 322 and 324 to contract or extend it's length as required. In the solid line position shown in Figure 1k the actuator 320 is expanded and in the retracted position shown in dash lines which corresponds with the over-travel position 300 its length is contracted. Suitable sensors will be provided to sense the position of the carton 500 and activate the actuator 320 to move the system to and from the over-travel position (shown in dash lines) at the appropriate times. A lock collar 53 is normally secured on the cylinder rod 55 to allow the cylinder to retract to cause over-travel action for tape-cutting or L-clip taping, it can also be used to prevent the over-travel action by re-locating its lock position at the extended position for C-clip tape application, which does not require any air actuation or over-travel action as long as the cylinder is maintained at extended position.

1l illustrates another embodiment using a one piece wipe down arm 63a similar to that of Figure 1j. In the Figure 1l the roll 70 is moved well above the surface 502 to the dash line position illustrated so that the roll 70 does not press onto the surface 502. The tape is instead held against the surface by compressible roller 71 rotatably mounted on the frame 12 on an axel 73. The one piece arm 63a is free to move with the over-travel movement but still is provides the function of wiping down the tail end of the tape onto the tailing face 508 (see Figure 1d) of the carton 500. In this embodiment the stop pin 61 has been removed to allow the wipe down link to move away from the adjacent surface 502 of the carton 500. Generally a stop pin (not shown) will be provided at a convenient position to limit movement of the roll 30 and 70 as required to facilitate operation.

Figure 1m shows yet another activating system activated by sensors in the same manner as described above with respect to Figure 1k but in figure 1m the cylinder 320 is replaced by a similar cylinder 320a one end of which is connected to the pin 62 connecting the arm 34 and link 60 and its opposite end to a pin 321 mounted on the base 12. If preferred the one end may be connected to the link 32, the wipe down link 63a or the push bar 60 as deemed suitable. The cylinder 322a is activated in the same manner as cylinder 320 to move the assembly 32 to the over-travel position 300 at the appropriate time.

Figure 2a and 2b show a simple form of actuator cam 400 in the form of a substantially U-shaped cam element having a front face engaging leg 402 adapted and positioned to engage the leading face (leading edge 501 as will be described below) of a carton 500 to be taped and a trailing leg 404 interconnected by a bridging section 406. In Figure 2a the actuator cam is pivotably connected to the slide 202 described above and shown in Figures 1a, 1d and 1e and moves the cam against the spring as the leg 402 moves over the leading face 504 to the adjacent face 502 of the carton 500 while the end of the other leg is supported by the adjacent face 502 thereby to move the slide away from the adjacent face 502 and thereby move the applicator assembly 32 to the over-travel position as above described. A spring 408 biases the cam element 400 so that the stop pin 411 tends to engage stop cam 213 on the slide plate 204 and the leg 402 extends the farthest away from the frame 12 when in the rest position before a carton 500 is fed to the taper 10.

In the Figure 2b embodiment the slide 202 has been replaced by a lever 410 one end of which is pivotably mounted on the frame 12 via the pin 412 and the other is pivotably connected to the cam 400 in the same manner as the slide was connected thereto. The cam plate 208 is mounted on the lever 410 and interacts with the cam 210 as above described. A suitable spring 206a replaces the spring 206

Figure 2c shows a removable pin two of which 438 and 440 will normally be used depending on the configuration and what is to be applied to the carton. One pin namely the one shown at 438 is screwed into the base plate 12 of the tape applicator 10 below the actuating cam tailing leg 404 to restrict its swing-down movement and thereby maintain the application assembly in the over-travel position until the carton discharged completely off the cam when only a leading L-clip is to be applied i.e. without the rear L-clip applied (see Figure 6d (1) The second pin 440 when used is screwed into the base 12 and is positioned in a hole 442 through the cutting blade cam 96 to hold the cutting knife assembly 96 in depressed position as shown in Figure 6d when only a strip is being applied to the face 502 using the sensor and solenoid system See Figure 3a to control the applicator 10 as will be described with respect to Figure 6d.

Obviously when the stop pins 438 and 440 are removed the device will function as shown in Figures 2d to 2g.

Figures 2d to 2g illustrate the sequence, first as shown in Figure 2d the cam 400 is turned clockwise as indicated by the arrow 450 by engagement with the leading edge 501 of the carton 500 traveling in the direction indicated by the arrow 503. When the leading face engaging leg 402 rides onto the adjacent surface 502 of the carton 500 and the trailing leg 404 is also resting on this surface 502 the slide mechanism 200 and applicator assembly 32 are in over-travel position 300 and the spring 206 is extended (see Figure 2e). When the trailing leg 404 clears the trailing corner 505 the spring 206 drives the slide 202 toward the adjacent face 502 of the carton and the cam 400 is turned clockwise as indicated by the arrow 452 and after the carton 500 has passed the cam 400 the spring 208 rotates the cam 400 about the pin 212 and back to starting position as shown in Figure 2g.

In Figure 2h the simple U-shaped cam 400 has been replaced with a more complicated U-shaped cam which is made up of separate components namely the leading face engaging leg 402a which is bolted to a discrete bridging section 406a with selectable mounting holes for tape length adjustment as indicated at 420 and similarly the trailing leg 404a is connected to the bridge 406a with selectable mounting holes for tape length adjustment as indicated at 422. The selectable mounting holes systems 420 and 422 permit selective adjustment of lengths of the legs 402a and 404a to permit adjustments so that different tape lengths may be applied to form front and rear "L" clip tapes along on adjacent side 502 of a carton 500. The legs 402a and 404a are each provided at their free ends with their respective rollers 405 and 407 to reduce friction when riding on the surface 502 of a carton 500.

The trailing leg 404a is made of two separate parts a mounting portion 424 and a caming portion 426 pivotably interconnect by pivot pin 428. The portions 426 and 428 are biased toward each other via spring 430 one end of which is connect to portion 424 and the other to portion 426. A stop 432 formed at the end of the portion 426 adjacent to the pivot pin 428 engages with a stop pin 434 on the portion 424 to limit opening movement of the portion 426 relative to the portion 424. With the portion 426 in the solid line position shown in Figure 2h the cam 400a is operative to move the application roll assembly to the over-travel position. The trailing leg 404a moves to the collapsed position shown in dash line position if another carton arrives before the completion of the current taping cycle to prevent carton jamming. The spring 430 is sufficiently strong to maintain the leg 404a in the solid line position unless force by an errant carton into the dash line position.

Figure 2i shows an alternative two part actuator cam structure 400b with cam one part composed of the leading leg 402 and a modified bridging section 406b that is extended to form an leading L-shaped member 450 and the trailing leg 404 is eliminated and replaced by a roller 451. The spring 408 biases the L-shaped member 450 so that the stop pin 411 thereon engages a cam stop 213. A second "L" shape cam 452 is pivoted on the front of the base plate 12 via pivot pin 454 and a spring 456 biases a first arm 458 of the cam 452 against a stop pin 460 on the base 12. The second arm 462, in rest position with arm 458 against stop 460, is positioned to engage the leading face of the next carton to be taped and is rotated clockwise by the incoming carton and then the end of the second arm 462 and the rounded tip 464 of the arm rides on the surface 502 of the carton 500 being processed. In this position the roller 451 rides on the arm 458 (as shown in dash lines) and hold the application assembly in the over-travel position. The second cam 452 serves as the collapsible leg in carton jamming prevention.

In the Figure 3a embodiment the cam 400 has been replaced by sensors S1 and S2 and a solenoid actuator 600 that is actuated and deactivated by the solenoids S1 and S2 which sense the carton 500 as it is passed by the actuator or taper 10 to operate the solenoid 600 as required.

Figure 3b shows an electrical control circuit with three different selectable taping configurations with two 2-positions selector switches: as shown with the first switch 700 open to cut off the power supply as shown in dash lines the system will produce C-clip taping. With switch 700 closed as shown in solid line and second switch 702 open as shown in dash lines in Figure 3b leading and trailing L-clip will be produced and with switches 700 and 702 both closed, only the front or leading L-clip will be produced.

The control circuit consists of: in-put devises of selector switches 700 and 702; limit switches with normally open contacts or sensors (SW1 for S1 and SW2 for S2 in fig 3b) and the out-put of a solenoid 600 as indicated and shown by standard electrical symbols. In simple terms, the switches and the solenoid are wired to a series circuit between the two power lines are indicated at 706 and 708.

S2 is positioned to the front of the tape applicator 10; S1 is position to the down stream of the tape applicator 10. Their positions can be adjusted on the bar 704 to achieve different tape length for the front and rear L-clip tape lengths on surface 502 of the carton as required. They are mounted in equal distance between the cutting blade 97 for equal tape length, and the distance measuring from the cutting blade 97 to each switch is directly proportional to the resulting tape length applied onto the top of the carton.

Figure 3c shows the applicator after the sensor S1 has detected the carton 500 and energized the solenoid 600 to the over-travel position 300 illustrated wherein the tape 18 will be cut off by the knife 97, and also illustrates the tape braking/tension control movement at over-travel position as described above.

Figure 3d illustrates the position of the various parts of the applicator 10 at the commencement of the application of the trailing L-clip tape application action that follows the tape-cutting action for the front "L" clip as illustrated by figure 3c when both leading and trailing L-clips are being applied to the carton. The sensor S2 senses the passing of the rear or trailing side 508 of the carton 500 and activates the sensor S2 to de-energize the solenoid 600 causing the release from the over-travel position and the roll 30 to apply the rear L-clip tape to the surface 502. This Figure also shows the loose tension condition of the tape provided for easy adhesion contact onto the carton opposite the arrow 750.

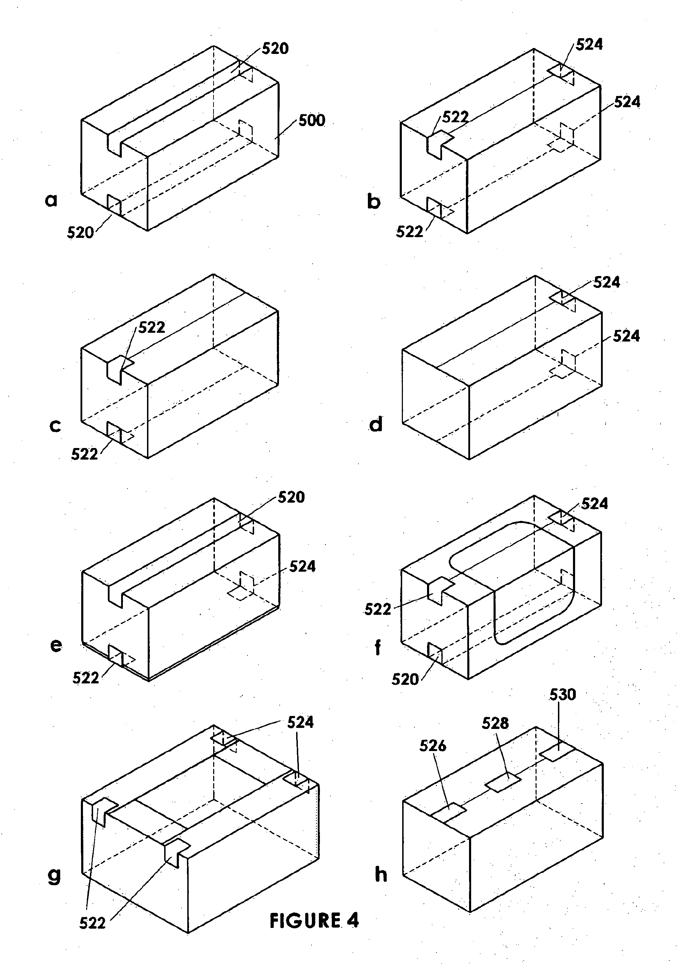

Figures 4a to h show some of the variations of tape application that may be done using the present invention. Figure 4a illustrates the most common case sealing arrangement wherein a C-clip tape 520 is applied to the top and the bottom of carton 500. Figure 4b shows a leading L-clip 522 and a trailing L-clip 524 applied to a carton 500 (both top and bottom).

Figure 4c shows leading L-clips 522 to the top and bottom and no trailing L-clips while Figure 4d shows to trailing L-clips and no leading L-clips being applied. Figure 4e shows a C-clip applied to one side (top or bottom) and leading and trailing L-clips. Figure 4f shows leading and trailing L-clips 522 and 524 respectively applied to one side (top) and a C-clip to the bottom of a different form of carton. Figure 4g illustrates the use of a pair of leading L-clips and tailing L-clips 522 and 524applied to yet another form of carton and Figure 4h shows the application of discrete spaced apart tape patches 526, 528 and 539 applied to the same face of a carton.

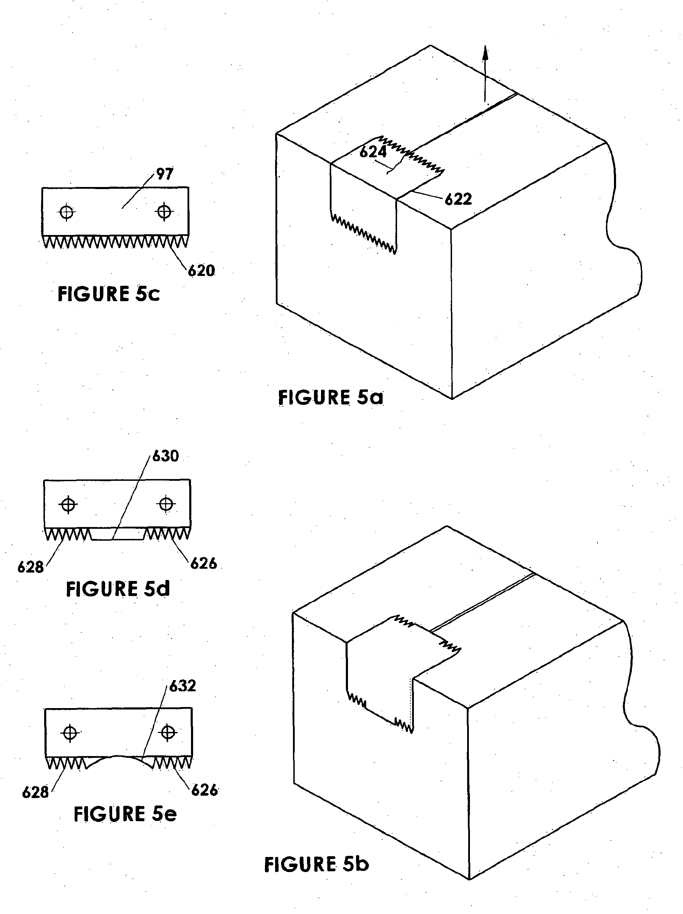

Figure 5c shows a conventional serrated edge as is normally used in tape applicators and figure 5a shows an L-clip 622 cut using such a knife. As indicated at 624 a split has been found to occur regularly when this kind of knife edge is used. To overcome this problem applicant has found that if a serrated cutter is used to cut only adjacent to the edges of the tape 18 as indicated at 626 and 628 in Figures 5d and 5e and the intervening length between the serrated portion 626 and 628 is cut by a straight or curved blade 630 and 632 respectively the tendency is significantly reduced. The L-clip 634 shown in Figure 5b is produced using the knife shown in Figure 5d.

Figure 6a-1 shows a carton 500 sealed with top and bottom C-clip tapes as indicated at 520 (see also Figure 4a). This sealed carton shown in figure 6a-1 is produced by the mechanical form of the present invention shown in Figures 1 and 2 which uses the set up shown in Fig 6a-2 wherein the cam follower 210 is in the pocket 214 on the link 60 i.e. in its inactive position.

Fig 6a-3, 4, 5, 6, 7 shows the sequence of operation for C-clip tape application of the multifunctional tape applicator 10 with cam actuation of actuating cam 400. The carton 500 moves against and displaces the roll 30 in the conventional manner as shown in Figures 6a-3 and 6a-4 to apply tape to the leading face 504 an start along the face 502 and carries on in the conventional manner to complete the taping as shown in sequence in 6a-5,6a-6 and 6a-7.

The cam 400 is disabled as the cam roller 210 cannot engage the cam plate 208 Fig 6b-1 shows a carton sealed with front and rear L-clip tapes on top and bottom as described above with reference to Figure 4b. This sealed carton shown in figure 6b-1 is produced by the mechanical form of the present invention shown in Figures 1 and 2 which uses the set up shown in Fig 6b-2 wherein the cam follower 210 is out of the pocket 214 on the link 60 i.e. in its operative position.

Fig 6b-3, 4, 5, 6, 7, 8 show the sequence of operation for front and rear L-clip tape application of the multifunctional tape applicator with cam actuation and set-up requirements as shown on Fig 6b-2. With the cam roll 210 in operative position when the slide 202 is moved up by the action of the cam 400 the engagement of the roll 210 with the plate cam 208 moves the application assembly 32 to the over-travel position 300 (see Figure 6b-5) wherein the tape 18 is clear of the face 502 and is cut by the knife 97. The device remains in this over-travel position until the trailing leg 404 of the cam 400 clears the rear face 508 of the carton 500 and permits the cam 400 to turn clockwise and thereby release the slide 202 so that it is pulled toward the carton by the spring 206 which permits the spring 56 to return the roll 30 into pressing relationship with the surface 502 and apply the leading end of the trailing L-clip to the surface 502 at a spaced distance from the leading L-clip. The remainder of the application of the trailing L-clip is the same as for a conventional C-clip

Fig 6c-1 shows a carton sealed with only front or leading L-clip tapes on top and bottom. This sealed carton shown in figure 6c-1 is produced by the mechanical form of the present invention shown in Figures 1 and 2 which uses the set up shown in Fig 6c-2 and 6c-3 wherein the cam follower 210 is out of the pocket 214 on the link 60 i.e. in its operative position and the pin 438 is mounted in the plate 12. In this setup the pin 438 restricts the movement of the leg 404 toward the carton thereby to prevent the rear L-clip tape application by maintaining the over-travel position until the carton releases the leg 402 as shown by the actions shown in sequence in Figures 6c-4 to 6c-8.

Fig.6d-1 shown a carton sealed only with a flat tape section 528 such as that shown in Figure 4h. This sealed carton shown in figure 6d-1 is produced by the sensor and solenoid form of the present invention as shown in Figure 3 a which uses the set up shown in Fig 6d-2 and 6d-3 wherein the cam follower 210 is out of the pocket 214 on the link 60 i.e. in its operative position and the pin 440 is mounted in the plate 12 and is received in hole 442 in the knife assembly 96 and the second pin 438 mounted as indicated on the base plate 12 of the tape applicator to hold the applicator roll arm 34 with the apply roll 30 at the surface 502 of the carton. The application roll arm 34 has to be lifted by hand to insert the stop pin 438 onto the base plate 12. The stop pin 438 restricts the movement of the application roll 30 and the wipe-down roll 70 below the level of surface 502 assuming 502 is at the top of the carton. Obviously if 502 was the bottom this level would be above.

Fig 6d-4 shows a typical control circuit with two switches SW1, SW2, (described above and below as the sensors S1 and S2 and may be part of the sensors S1 and S2) both with normally open and normally close contacts connected to a solenoid SOL 600, wired to the power sources 706, 708. SW2 switch is wired with common to the power source 706, normally close contact to the normally open contact of Sw1 switch, Sw1 switch is wired with common to the solenoid 600 and normally close contact to the normally open contact of SW2 switch. The other power source wire 708 is connected to the solenoid 600. The control circuit allows the actuation of the solenoid 600 with SW2 switch activated, SW1 switch de-activated as shown on Fig 6d-6 and with SW2 switch de-activated, SW1 switch activated as shown on Fig 6d-8. The control circuit also turns off the actuation of the solenoid 600 with SW1 switch activated, S2 switch activated (as shown on Fig 6d-7) and with both SW2 switch and S1 switch de-activated as shown on Fig 6d-5.

SW2 switch mounted to the front of the tape applicator, SW1 switch mounted down-stream of the tape applicator, both with equal distance measuring from the switch or sensor to the cutting blade 97 for positioning the section of tape in the middle of the carton.

Figure 6d-5, shows the normal home position when tape is being applied to the surface 502 but when a carton is initially fed to the machine as sensed for example by sensor S2 the solenoid 600 is activated to move the roll 30 to the over-travel position so the leading end of the tape can not make contact with surface 502 as shown in Figure 6d-6 and when the sensor S1 senses the leading end of the carton 500 the solenoid 600 releases the slide plate 202 and the roll 30 applies the tape to the surface 502 as shown in Figure 6d-7. When the trailing end or the carton 500 is sensed passing the sensor S2the solenoid 600 is again activated to move the device to the over-travel position as shown in Figure 6d-8 and the tape 18 is severed to define the length of the patch 528. When sensor S1 senses the passing of the trailing end of the carton 500 the solenoid 600 is deactivated to permit the applicator to return to home position shown in fig 6d-5

Having described the invention, modifications will be evident to those skilled in the art without departing from the scope of the invention as defined in the appended claims.

## Claims

1. A multifunction tape applicator (10) for applying a closing tape ribbon (18) to a carton (500) in the form of a pair of spaced L-clips (522, 524) as a leading L-clip (522) positioned on a leading face (504) and a trailing L-clip (524) at a trailing face (508) of said carton (500), the applicator comprising a frame (12),
a source of tape (16) mounted on said frame (12),
a tape application roll assembly (32) pivotably mounted on said frame (12) and including a tape applicator (30) to apply a leading end of a tape (18) from said source (16) to said leading face (504) and around an edge and an adjacent face (502) of a carton (500) moving relative to said tape applicator device (10),
a wipe down assembly (50) pivotably mounted on said frame (12) and including a wipe down (70) to wipe a tape applied to said carton (500) along said trailing face (508) of said carton (500) remote from said leading face (504),
a push bar link (60) interconnecting said tape application roll assembly (32) and said wipe down assembly (50) for movement together,
an over-travel system for moving said tape applicator (30) from said adjacent face (502) of said carton (500) to an over-travel position spaced from said adjacent face (502), said over-travel system including an actuator (400, 400a, 400b, 420, 450, 452) to move said tape application roll assembly (32) and thereby move said tape applicator (30) to said over-travel position, and
a cutting assembly including a cut off knife positioned to engage said tape (18) when said a over-travel system moves said tape applicator (30) to said over-travel position and wherein said over-travel system moves said tape applicator (30) back to said carton (500) from said over-travel position to apply said trailing L-clip (524), **characterised by**
said actuator (400, 400a, 400b, 420, 450, 452) being in the form of an actuator cam (400, 400a, 400b, 452) having a leading face engaging leg (402, 402a), a trailing leg (404, 404a, 458) and a bridging section (406) there between
and wherein said bridging section (406) is connected via a connection (200, 208, 210, 410) to said push bar link (60), said leading face engaging leg (402, 402a) and trailing leg (404, 404a, 458) being positioned to engage with surfaces (502, 504) of said carton (500) moving therepast and control movement of said bridging section (406).

2. A multifunction tape applicator (10) according to Claim 1 wherein said leading face engaging leg (402.
402a) and trailing leg (404, 404a) are located at opposite ends of said bridging section (406).

3. A multifunction tape applicator (10) according to Claim 1 wherein said leading face engaging leg (402, 402a) is integral with said bridging section (406) and said trailing leg (458) is separate leg pivotably mounted on said frame (12) and wherein said trailing leg (458) engages with said bridging section (406) to position said bridging section (406).

4. A multifunction tape applicator (10) according to any preceding claim wherein said connection (200, 208, 210, 410) includes a moveable member (202) mounted on said frame (12) and on which is mounted a cam element (208), and wherein said actuator cam (400, 400a, 400b, 420, 450, 452) moves said member (202) and thereby said cam element (208) to its over-travel position and a cam follower (210) on said push bar link (60) to engage said cam element (208) to move said application roll assembly (32) to said over-travel position.

5. A multifunction tape applicator (10) according to any preceding claim further comprising a lost motion connection (65, 57, 67a) connecting said push bar link (60) to one of said application roll assembly (32) and said wipe down assembly (50).

6. A multifunction tape applicator (10) according to any preceding claim further comprising a tape control system comprising a brake pad (82) mounted on a brake assembly (76) pivotably mounted on an applicator arm (34) of said tape application roll assembly (32) adjacent to an exit roll (28) over which said tape (18) travels on route to said tape applicator (30), and a cam pin (88) mounted on said push bar link (60) in a position to engage said pivoted brake assembly (76) when said application roll assembly (32) is moved to said over-travel position to pinch said tape (18) between brake pad (82) and said exit roller (28).

7. A multifunctional tape applicator (10) according to Claim 6 wherein said tape control system also comprises a tape path (20) between said source of said tape (16) and said tape applicator (30) wherein said tape (18) is directed over an entry roll (22) and a one way clutch roll (26) en route to said application roll assembly (32) and a dancer roller (24) mounted to engage said tape in said tape path between entry roll (22) and said one-way clutch roll (26) and to advance extra length of tape when said application roll assembly (32) is moved to said over-travel position.

8. A multifunctional tape applicator (10) according to Claim 6 or Claim 7 wherein said tape control system further comprises a stationary extension roller (90) positioned to intersect said tape path (20) between a tape guide roller (27) and said exit roller (28) mounted on said applicator arm (34) when said application roll assembly (32) is moved to said over-travel position thereby to advance extra tape between said brake pad (82) and one way clutch roll (26) when tape being pinched by the brake pad (82).

9. A multifunctional tape applicator (10) according to any of Claims 4 to 8 wherein said cam follower (10) includes means to disable said actuator cam (400, 400a, 400b, 420, 450, 452) to move said applicator roll assembly (32).

10. A multifunctional tape applicator (10) according to any preceding claim wherein said over-travel system includes a cam plate (208) moveably mounted (200, 410) on said frame 12 and said cam follower (210) mounted on said push bar link (60) and said actuator cam (400, 400a, 400b, 420, 450, 452 600) for moving said cam plate (208) from a normal position adjacent to said carton (500) to an over-travel position farther from said carton (500) thereby when said cam plate (208) and said cam follower (210) are engaged said push bar link (60) is moved away from said carton (500) into said over-travel position.

## Patentansprüche

1. Multifunktionsbandapplikator (10) zum Anbringen eines Verschlussklebebandes (18) auf einem Karton (500) in Form eines Paares beabstandeter L-Clips (522, 524) als ein vorderer L-Clip (522), der auf einer vorderen Fläche (504) angeordnet ist, und ein hinterer L-Clip (524) auf einer hinteren Fläche (508) des Kartons (500), wobei der Applikator aufweist:
einen Rahmen (12),
eine am Rahmen (12) angebrachte Klebebandquelle (16),
eine Klebebandapplikations-Walzenbaugruppe (32), die drehbar am Rahmen (12) gelagert ist und die einen Klebebandapplikator (30) zum Anbringen eines vorderen Endes des Klebebands (18) aus der Klebebandquelle (16) auf die vordere Fläche (504) und um eine Kante auf die angrenzende Fläche (502) des Kartons (500) enthält, der sich relativ zur Klebebandapplikatoreinrichtung (10) bewegt,
eine am Rahmen (12) drehbar gelagerte Anpressbaugruppe (50), die eine Anpressrolle (70) enthält, um ein auf dem Karton (500) angebrachtes Klebeband entlang der hinteren Fläche (508) des Kartons (500) gegenüber der vorderen Fläche (504) anzubringen,
ein Schubstangengelenk (60), das die Klebebandapplikations-Walzenbaugruppe (32) und die Anpressbaugruppe (50) zur gemeinsamen Bewegung miteinander verbindet,
ein Nachlaufsystem, um den Klebebandapplikator (30) von der angrenzenden Fläche (502) des Kartons (500) zu einer von der angrenzenden Fläche (502) beabstandeten Nachlaufposition zu bewegen, wobei das Nachlaufsystem einen Aktor (400, 400a, 400b, 420, 450, 452) enthält, um die Klebebandapplikations-Walzenbaugruppe (32) und damit den Klebebandapplikator (30) in die Nachlaufposition zu bewegen, und
eine Schneidbaugruppe mit einem Trennmesser, das so positioniert ist, dass es mit dem Klebeband (18) in Eingriff kommt, wenn das Nachlaufsystem den Klebebandapplikator (30) in die Nachlaufposition bewegt, und wobei das Nachlaufsystem den Klebebandapplikator (30) aus der Nachlaufposition zurück zum Karton (500) bewegt, um den hinteren L-Clip (524) anzubringen,
**dadurch gekennzeichnet, dass** der Aktor (400, 400a, 400b, 420, 450, 452) die Form eines Aktornockens (400, 400a, 400b, 452) hat mit einem mit der vorderen Fläche in Eingriff stehenden Schenkel (402, 402a), einem hinteren Schenkel (404, 404a, 458) und einem Brückenabschnitt (406) dazwischen,
und wobei der Brückenabschnitt (406) über eine Verbindung (200, 208, 210, 410) mit dem Schubstangengelenk (60) verbunden ist, wobei der mit der vorderen Fläche in Eingriff stehende Schenkel (402, 402a) und der hintere Schenkel (404, 404a, 458) so positioniert sind,
dass sie mit Oberflächen (502, 504) des Kartons (500) in Eingriff kommen, der sich an ihnen vorbeibewegt, und die Bewegung des Brückenabschnitts (406) steuern.

2. Multifunktionsbandapplikator (10) nach Anspruch 1, wobei der mit der vorderen Fläche in Eingriff stehende Schenkel (402, 402a) und der hintere Schenkel (404, 404a) an gegenüberliegenden Enden des Brückenabschnitts (406) angeordnet sind.

3. Multifunktionsbandapplikator (10) nach Anspruch 1, wobei der mit der vorderen Fläche in Eingriff stehende Schenkel (402, 402a) integral mit dem Brückenabschnitt (406) ausgebildet ist und der hintere Schenkel (458) ein getrennter Schenkel ist, der drehbar am Rahmen (12) gelagert ist, und wobei der hintere Schenkel (458) mit dem Brückenabschnitt (406) zur Positionierung des Brückenabschnitts (406) in Eingriff kommt.

4. Multifunktionsbandapplikator (10) nach einem der vorigen Ansprüche, wobei die Verbindung (200, 208, 210, 410) ein am Rahmen (12) angebrachtes bewegliches Element (202) enthält, an dem ein Nockenelement (208) angebracht ist, und wobei der Aktornocken (400, 400a, 400b, 420, 450, 452) das Element (202) und dadurch das Nockenelement (208) in seine Nachlaufposition bewegt, und einen Nockenstößel (210) am Schubstangengelenk (60) für den Eingriff mit dem Nockenelement (208), um die Klebebandapplikations-Walzenbaugruppe (32) in die Nachlaufposition zu bewegen.

5. Multifunktionsbandapplikator (10) nach einem der vorigen Ansprüche, der ferner eine Leerlaufverbindung (65, 57, 67a) aufweist, die das Schubstangengelenk (60) entweder mit der Klebebandapplikations-Walzenbaugruppe (32) oder der Anpressbaugruppe (50) verbindet.

6. Multifunktionsbandapplikator (10) nach einem der vorigen Ansprüche, der ferner ein Klebeband-Steuersystem mit einem Bremsbelag (82) an einer Bremsbaugruppe (76), die drehbar an einem Applikatorarm (34) der Klebebandapplikations-Walzenbaugruppe (32) neben einer Auslaufwalze (28) gelagert ist, aufweist, über die das Klebeband (18) zum Klebebandapplikator (30) läuft, und einen Nockenstift (88), der am Schubstangengelenk (60) an einer Position angebracht ist, so dass er mit der drehbaren Bremsbaugruppe (76) in Eingriff kommt, wenn die Klebebandapplikations-Walzenbaugruppe (32) in die Nachlaufposition bewegt wird, um das Klebeband (18) zwischen dem Bremsbelag (82) und der Auslaufwalze (28) einzuklemmen.

7. Multifunktionsbandapplikator (10) nach Anspruch 6, wobei das Klebeband-Steuersystem außerdem einen Klebebandweg (20) zwischen der Klebebandquelle (16) und dem Klebebandapplikator (30) aufweist, wobei das Klebeband (18) über eine Einlaufwalze (22) und eine Einweg-Kupplungswalze (26) zur Klebebandapplikations-Walzenbaugruppe (32) sowie eine Tänzerwalze (24) geführt wird, die so installiert ist, dass sie das Klebeband im Klebebandweg zwischen der Einlaufwalze (22) und der Einweg-Kupplungswalze (26) greift, um eine Extralänge des Klebebandes zuzuführen, wenn die Klebebandapplikations-Walzenbaugruppe (32) in die Nachlaufposition bewegt wird.

8. Multifunktionsbandapplikator (10) nach Anspruch 6 oder 7, wobei das Klebeband-Steuersystem ferner eine stationäre Verlängerungswalze (90) aufweist, die so positioniert ist, dass sie den Klebebandweg (20) zwischen einer Klebeband-Führungsrolle (27) und der Auslaufwalze (28) am Applikatorarm (34) schneidet, wenn die Klebebandapplikations-Walzenbaugruppe (32) in die Nachlaufposition bewegt wird, um dadurch Extra-Klebeband zwischen dem Bremsbelag (82) und der Einweg-Kupplungswalze (26) zuzuführen, wenn das Klebeband von Bremsbelang (82) eingeklemmt wird.

9. Multifunktionsbandapplikator (10) nach einem der Ansprüche 4 bis 8, wobei der Nockenstößel (10) Mittel enthält, die den Aktornocken (400, 400a, 400b, 420, 450, 452) hindern, die die Klebebandapplikations-Walzenbaugruppe (32) zu bewegen.

10. Multifunktionsbandapplikator (10) nach einem der vorigen Ansprüche, wobei das Nachlaufsystem eine am Rahmen 12 beweglich angebrachte (200, 410) Nockenplatte und den am Schubstangengelenk (60) angebrachten Nockenstößel (210) sowie den Aktornocken (400, 400a, 400b, 420, 450, 452) aufweist, um die Nockenplatte (208) dadurch aus der Normalposition neben dem Karton (500) in die Nachlaufposition vom Karton (500) entfernt zu bewegen, wenn die Nockenplatte (208) und der Nockenstößel (210) in Eingriff sind, wobei das Schubstangengelenk (60) vom Karton (500) weg in die Nachlaufposition bewegt wird.

## Revendications

1. Applicateur de bande à fonctions multiples (10) pour appliquer un ruban de bande de fermeture (18) sur une caisse en carton (500) sous forme d'une paire d'attaches en L espacées (522, 524), en tant qu'une attache en L avant (522) positionnée sur une face avant (504) et une attache en L arrière (524) sur une face arrière (508) de ladite caisse en carton (500), l'applicateur comprenant
un bâti (12),
une source de bande (16) montée sur ledit bâti (12), un ensemble de rouleau d'application de bande (32) monté de façon pivotante sur ledit bâti (12) et comprenant un applicateur de bande (30) pour appliquer une extrémité avant d'une bande (18) à partir de ladite source (16) sur ladite face avant (504) et autour d'un bord et d'une face adjacente (502) d'une caisse en carton (500) se déplaçant par rapport audit dispositif applicateur de bande (10),
un ensemble d'organe d'apposition (50) monté de façon pivotante sur ledit bâti (12) et comprenant un organe d'apposition (70) pour apposer une bande appliquée sur ladite caisse en carton (500) le long de ladite face arrière (508) de ladite caisse en carton (500) éloignée de ladite face avant (504),
une bielle de barre poussoir (60) raccordant mutuellement ledit ensemble de rouleau d'application de bande (32) et ledit ensemble d'organe d'apposition (50) pour un mouvement conjoint,
un système de dépassement pour déplacer ledit applicateur de bande (30) à partir de ladite face adjacente (502) de ladite caisse en carton (500) jusqu'à une position de dépassement espacée de ladite face adjacente (502), ledit système de dépassement comprenant un actionneur (400, 400a, 400b, 420, 450, 452) pour déplacer ledit ensemble de rouleau d'application de bande (32) et ainsi déplacer ledit applicateur de bande (30) jusqu'à ladite position de dépassement, et
un ensemble pour couper comprenant un couteau de coupe positionné pour mettre en prise ladite bande (18) lorsque ledit système de dépassement déplace ledit applicateur de bande (30) jusqu'à ladite position de dépassement et dans lequel ledit système de dépassement ramène ledit applicateur de bande (30) à ladite caisse en carton (500) à partir de ladite position de dépassement pour appliquer ladite attache en L arrière (524),
**caractérisé par** ledit actionneur (400, 400a, 400b, 420, 450, 452) étant sous la forme d'une came d'actionnement (400, 400a, 400b, 452) comportant un segment d'entrée en prise (402, 402a) avec la face avant, un segment arrière (404, 404a, 458) et une section de liaison (406) entre ceux-ci
et dans lequel ladite section de liaison (406) est raccordée, par l'intermédiaire d'un raccordement (200, 208, 210, 410), à ladite bielle de barre-poussoir (60), ledit segment d'entrée en prise (402, 402a) avec la face avant et ledit segment arrière (404, 404a, 458) étant positionnés pour entrer en prise avec des surfaces (502, 504) de ladite caisse en carton (500) se déplaçant devant ceux-ci et commander un mouvement de ladite section de liaison (406).

2. Applicateur de bande à fonctions multiples (10) selon la revendication 1, dans lequel ledit segment d'entrée en prise (402, 402a) avec la face avant et ledit segment arrière (404, 404a) sont situés à des extrémités opposées de ladite section de liaison (406).

3. Applicateur de bande à fonctions multiples (10) selon la revendication 1, dans lequel ledit segment d'entrée en prise (402, 402a) avec la face avant est solidaire de ladite section de liaison (406) et ledit segment arrière (458) est un segment séparé monté de façon pivotante sur ledit bâti (12) et dans lequel ledit segment arrière (458) entre en prise avec ladite section de liaison (406) pour positionner ladite section de liaison (406).

4. Applicateur de bande à fonctions multiples (10) selon une quelconque revendication précédente, dans lequel ledit raccordement (200, 208, 210, 410) comprend un membre mobile (202) monté sur ledit bâti (12) et sur lequel est monté un élément à came (208), et dans lequel ladite came d'actionnement (400, 400a, 400b, 420, 450, 452) déplace ledit membre (202), et ainsi ledit élément à came (208), jusqu'à sa position de dépassement et un suiveur de came (210) sur ladite bielle de barre-poussoir (60) pour mettre en prise ledit élément à came (208) pour déplacer ledit ensemble de rouleau d'application (32) jusqu'à ladite position de dépassement.

5. Applicateur de bande à fonctions multiples (10) selon une quelconque revendication précédente, comprenant en outre un raccordement à mouvement perdu (65, 57, 67a) raccordant ladite bielle de barre-poussoir (60) à un dudit ensemble de rouleau d'application (32) et dudit ensemble d'organe d'apposition (50).

6. Applicateur de bande à fonctions multiples (10) selon une quelconque revendication précédente, comprenant en outre un système de commande de bande comprenant un patin de frein (82) monté sur un ensemble de frein (76) monté de façon pivotante sur un bras applicateur (34) dudit ensemble de rouleau d'application de bande (32) adjacent à un rouleau de sortie (28) par-dessus lequel ladite bande (18) se déplace jusqu'au dit applicateur de bande (30), et une goupille de came (88) montée sur ladite bielle de barre-poussoir (60) dans une position pour mettre en prise ledit ensemble de frein (76), ayant pivoté, lorsque ledit ensemble de rouleau d'application (32) est déplacé jusqu'à ladite position de dépassement pour pincer ladite bande (18) entre le patin de frein (82) et ledit rouleau de sortie (28).

7. Applicateur de bande à fonctions multiples (10) selon la revendication 6, dans lequel ledit système de commande de bande comprend également un trajet de bande (20) entre ladite source de ladite bande (16) et ledit applicateur de bande (30), dans lequel ladite bande (18) est dirigée par-dessus un rouleau d'entrée (22) et un rouleau à roue libre (26) jusqu'au dit ensemble de rouleau d'application (32) et un rouleau danseur (24) monté pour mettre en prise ladite bande dans ledit trajet de bande entre un rouleau d'entrée (22) et ledit rouleau à roue libre (26) et pour faire avancer une longueur supplémentaire de bande lorsque ledit ensemble de rouleau d'application (32) est déplacé jusqu'à ladite position de dépassement.

8. Applicateur de bande à fonctions multiples (10) selon la revendication 6 ou la revendication 7, dans lequel ledit système de commande de bande comprend en outre un rouleau d'extension stationnaire (90) positionné pour croiser ledit trajet de bande (20) entre un rouleau de guidage de bande (27) et ledit rouleau de sortie (28) montés sur ledit bras applicateur (34) lorsque ledit ensemble de rouleau d'application (32) est déplacé jusqu'à ladite position de dépassement pour ainsi faire avancer plus de bande entre ledit patin de frein (82) et ledit rouleau à roue libre (26) lorsqu'une bande est pincée par le patin de frein (82).

9. Applicateur de bande à fonctions multiples (10) selon une quelconque des revendications 4 à 8, dans lequel ledit suiveur de came (10) comprend des moyens pour désactiver ladite came d'actionnement (400, 400a, 400b, 420, 450, 452) pour déplacer ledit ensemble de rouleau applicateur (32).

10. Applicateur de bande à fonctions multiples (10) selon une quelconque revendication précédente, dans lequel ledit système de dépassement comprend une plaque à came (208) montée de façon mobile (200, 410) sur ledit bâti 12 et ledit suiveur de came (210) monté sur ladite bielle de barre-poussoir (60) et ladite came d'actionnement (400, 400a, 400b, 420, 450, 452 600) pour déplacer ladite plaque à came (208) à partir d'une position normale adjacente à ladite caisse en carton (500) jusqu'à une position de dépassement plus loin de ladite caisse en carton (500), ainsi, lorsque ladite plaque à came (208) et ledit suiveur de came (210) sont en prise, ladite bielle de barre-poussoir (60) est éloignée de ladite caisse en carton (500) dans ladite position de dépassement.
